# EUROPEAN PATENT SPECIFICATION

(11) **EP 4 305 944 B1**
(45) Date of publication and mention of the grant of the patent: **29.10.2025**
(21) Application number: 23176145.3
(22) Date of filing: 30.05.2023
(51) Int. Cl.: A01D 34/00, A01D 34/64, A01D 34/82, A01D 75/20

(54) **CONTROL SYSTEM FOR WORK VEHICLE**
STEUERUNGSSYSTEM FÜR ARBEITSFAHRZEUG
SYSTÈME DE COMMANDE POUR VÉHICULE DE TRAVAIL

(30) Priority: 13.07.2022 JP 2022112435
(43) Date of publication of application: 17.01.2024
(73) Proprietor: KANZAKI KOKYUKOKI MFG. CO., LTD., Hyogo 661-0981 (JP)
(72) Inventor: ITO, Fumiaki, Hyogo, 661-0981 (JP); OGURA, Kohei, Hyogo, 661-0981 (JP)
(74) Representative: Isarpatent

(56) References cited:
- EP-A1- 2 664 488
- US-B2- 10 440 880

## Description

### TECHNICAL FIELD

The present invention relates to a control system for a work vehicle including a work implement.

### BACKGROUND ART

Work vehicles that include a work implement have been conventionally known. For example, lawn mowing vehicles that include a lawn mowing device as a work implement driven to perform a lawn mowing work have been conventionally known. As such a work vehicle, an electric work vehicle including a traveling motor that is an electric motor that drives wheels and a work motor that is an electric motor that drives a work implement is also considered.

For example, Patent Document 1 describes a work vehicle in which each of traveling motors that are left and right electric motors drives wheels at a corresponding side and a work motor drives a rotation blade of a lawn mowing device (work implement).

It is also described that the vehicle described in Patent Document 1 includes an ROS switch that corresponds to a backward work permission switch. When the vehicle is about to move in a backward direction with the lawn mowing device activated, the blade of the lawn mowing device stops under normal conditions. When the ROS switch is closed, that is, is turned ON, an operation of the work motor is enabled by performing an operation of causing the vehicle to travel in the backward direction. Thus, mowing in the backward direction can be performed without being interrupted.

### PRIOR ART DOCUMENT

### PATENT DOCUMENT

Patent Document 1: United State Patent No. 10440880

### SUMMARY OF INVENTION

### TECHNICAL PROBLEM

In the vehicle described in Patent Document 1, there is still room for improvement from a viewpoint of enhancing safety when the backward work permission switch is operated OFF.

It is an object of the present invention to further enhance safety in a control system for a work vehicle when a backward work permission switch is operated OFF.

### SOLUTION TO PROBLEM

A first control system for a work vehicle according to the present invention is a control system for a work vehicle that includes a work implement and includes a work operation unit that is configured to instruct driving of the work implement by an ON operation performed by a user, a traveling operation unit that is configured to instruct forward traveling, backward traveling, and stopping of the work vehicle by an operation performed by the user, a control device that is configured to control driving of the work implement in accordance with the operation of the work operation unit, controls traveling of the work vehicle in accordance with the operation of the traveling operation unit, and forcibly stops the work implement when the work vehicle travels backward, and a backward work permission switch that is configured to disable forced stopping of the work implement at a start of backward traveling of the work vehicle by an ON operation of the backward work permission switch performed by the user, the control system further configured so that in a case where the backward work permission switch is operated ON and the work operation unit is operated ON, the control device drives the work implement when the work vehicle travels backward and, characterized in that in a case where the backward work permission switch is operated OFF and the work operation unit is operated ON, the control device forcibly stops the work implement both when the work vehicle is traveling backward and when the work vehicle is shifted from a backward traveling state to a stop state.

According to the first control system for a work vehicle described above, work efficiency can be increased and safety of the vehicle when the backward work permission switch is operated OFF can be further enhanced. Specifically, even when the vehicle travels backward, the work implement can be driven by control performed with the backward work permission switch operated ON, and therefore, a work while the vehicle is traveling backward is enabled and the work efficiency can be increased. Moreover, the work implement is forcibly stopped by control performed with the backward work permission switch operated OFF not only when the vehicle is traveling backward but also when the vehicle is shifted from a backward traveling state to a stop state. Thus, it is easier for a driver to prevent, in a case where the driver intentionally operates the backward work permission switch OFF, an obstacle from approaching the work implement in operation during backward traveling in which it is harder for the driver to see an area ahead of the vehicle in a travel direction than in forward traveling, so that safety can be further enhanced. It is also possible to prevent the driver from unintentionally and abruptly restarting driving of the work implement when the vehicle stops from backward traveling. Thus, safety can be further enhanced.

In the first control system for the work vehicle described above, the control device may be configured to forcibly stop the work implement when the work vehicle travels backward in a case where the backward work permission switch is operated OFF and the work operation unit is operated ON, and to drive the work implement, after forcibly stopping the work implement, only when the work vehicle finishes backward traveling and the work operation unit is shifted to the OFF operation and then is shifted to the ON operation again.

According to the above-described configuration, after forcibly stopping the work implement, when the work vehicle is traveling backward, the driver can limit restart of driving of the work implement to a case where the driver intentionally switches the work operation unit from the OFF operation to the ON operation, so that an even higher sense of safety can be given to the driver.

In the above-described configuration, a configuration in which the above-described configuration includes two traveling motors at left and right coupled to two wheels at left and right and driven independently from each other and two operation levers as the traveling operation units that are arranged separately at left and right of a driver's seat and each of which instructs a rotation direction and rotation speed of one of the wheels located at a corresponding side by moving of the corresponding operation lever in a front-rear direction, and, in a case where the backward work permission switch is operated OFF and the work operation unit is operated ON, the control device forcibly stops the work implement at least one of when it is determined that the two wheels at left and right rotate in a backward direction and when it is determined that average speed of the two wheels at left and right is equal to or higher than a predetermined value in terms of speed in the backward direction may be employed.

According to the above-described configuration, a turn in which it is difficult for the driver to see the travel direction only by viewing, such as a turn in which the rotation directions of the two wheels are opposite to each other and the vehicle moves while turning in the backward direction as a whole, is also set as backward traveling. Therefore, safety can be further enhanced by performing control to forcibly stop the work implement by determining backward traveling when the backward work permission switch is operated OFF.

### ADVANTAGEOUS EFFECTS OF INVENTION

According to a control system for the work vehicle, safety can be further enhanced when a backward work permission switch is operated OFF.

### BRIEF DESCRIPTION OF DRAWINGS

[FIG. 1] FIG. 1 is a perspective view of a work vehicle in which a control system of an embodiment of the present invention is incorporated.
[FIG. 2] FIG. 2 is a schematic configuration diagram of the work vehicle illustrated in FIG. 1.
[FIG. 3] FIG. 3 is a block diagram illustrating a control system of the work vehicle illustrated in FIG. 1.
[FIG. 4A] FIG. 4A is a block diagram illustrating a functional configuration of a control device that constitutes the control system illustrated in FIG. 3.
[FIG. 4B] FIG. 4B is a diagram illustrating a relationship between each determination unit illustrated in FIG. 4A and information transmitted from the each determination unit to the control unit.
[FIG. 5] FIG. 5 is a table illustrating an example of temporal changes of respective states of travel of a vehicle, a work drive switch, a backward work permission switch, and a work implement when the backward work permission switch is operated ON in the embodiment.
[FIG. 6] FIG. 6 is diagram illustrating an example of temporal changes of respective states of travel of a vehicle, a work drive switch, a backward work permission switch, and a work implement when the backward work permission switch is operated OFF in the embodiment.
[FIG. 7] FIG. 7 is a flowchart illustrating an example of a control method of the work implement in the embodiment.
[FIG. 8] FIG. 8 is a flowchart illustrating a subroutine of a backward determination process of the work implement in FIG. 7.

### DESCRIPTION OF EMBODIMENTS

An embodiment of the present invention will be described below in detail with reference to the accompanying drawings. In the following description, a case where a work vehicle is a lawn mowing vehicle will be described, but the work vehicle is not limited thereto and may be any other work vehicle including a work implement that performs one or more works of a snow removal work, an excavation work, a construction work, and an agricultural work. Although, in the following description, basically, a case where the present invention is applied to a vehicle including two operation levers at left and right that correspond to travel instruction tool also serving as steering instruction will be described, this is merely an example and the present invention may be applied to a vehicle in which a steering wheel is used as a turning indicator and an accelerator pedal provided at a front side of a seat is used as a travel instruction tool. In this case, traveling of the travel instruction tool is used to mean traveling excluding turning. Shapes, a number of components, arrangement relationship of parts, or the like described below are merely examples for illustrative purposes, and may be changed as appropriate to comply with specifications of the work vehicle. In the following description, similar elements in all of the drawings are denoted by a same reference numeral and redundant description will be omitted or simplified.

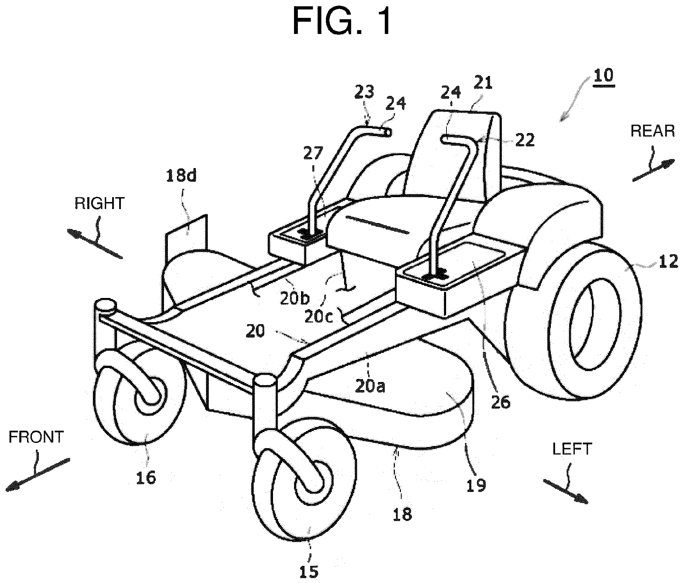

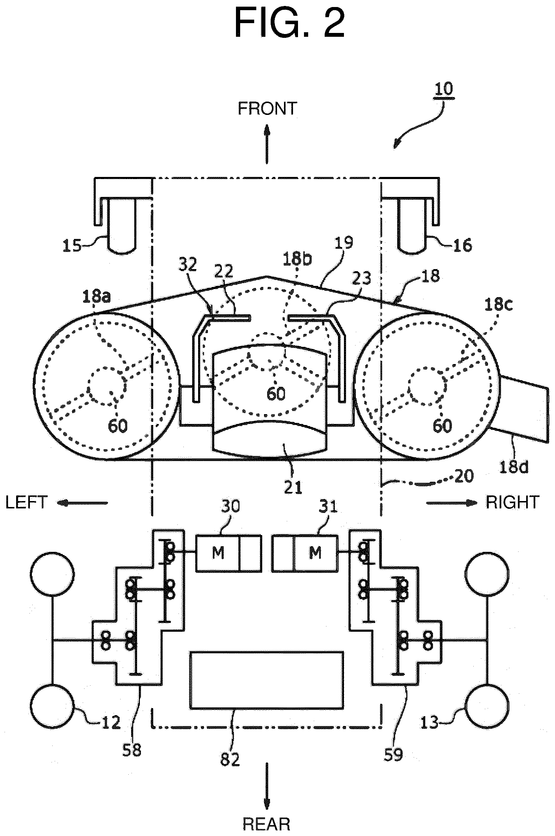

With reference to FIGs. 1 to 8, a control system of a work vehicle 10 of the embodiment will be described. In the following description, the work vehicle 10 will be referred to as a vehicle 10. FIG. 1 is a perspective view of the work vehicle 10 in which the control system of the embodiment is incorporated. FIG. 2 is a schematic configuration diagram of the vehicle 10. Note that, although, as for a configuration illustrated in FIGs. 1 to 8, a case where wheels 12 and 13 that are left and right drive wheels are arranged at a rear side and caster wheels 15 and 16 are arranged at a front side will be described, wheels that are drive wheels may be arranged at the front side and caster wheels may be arranged at the rear side.

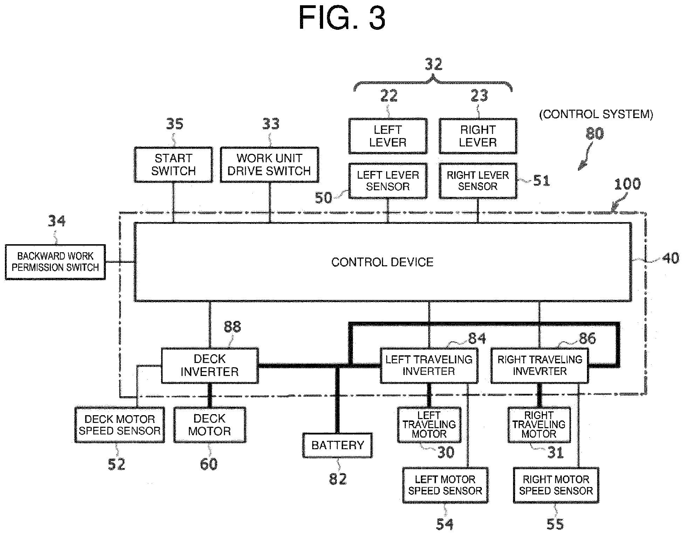

The vehicle 10 is a passenger self-propelled lawn mowing vehicle suitable for lawn mowing. The vehicle 10 includes the left wheel 12 and the right wheel 13 (FIG. 2) that are two wheels at left and right, the caster wheels 15 and 16, a lawn mowing device 18 that is a work implement, a left traveling motor 30 and a right traveling motor 31 (FIG. 2), three deck motors 60 (FIG. 2) that are work motors, two operation levers 22 and 23 at left and right that constitute a traveling operation unit 32, a work drive switch 33 (FIG. 3) that is a work operation unit, and a backward work permission switch 34 (FIG. 3). The vehicle 10 further includes two traveling inverters 84 and 86 at left and right, three deck inverters 88, and a control device 40 (FIG. 3) that constitute a control unit 100, and a battery 82 (FIG. 2). Each of the left traveling motor 30, the right traveling motor 31, and the deck motors 60 is an electric motor. The deck inverters 88 correspond to work inverters.

The left wheel 12 and the right wheel 13 are rear wheels supported at both left and right sides at a rear side of a main frame 20 that is a vehicle body, and serve as main drive wheels. The main frame 20 is formed of metal, such as steel or the like, into a beam structure or the like. The main frame 20 includes side plate portions 20a and 20b that extend approximately in a front-rear direction at both left and right ends and a coupling portion 20c that couples the side plate portions 20a and 20b at the left and right sides. Between rear end portions of the left and right side plate portions 20a and 20b, a driver's seat 21 on which a driver as a user sits is fixed at an upper side.

The left and right operation levers 22 and 23 are arranged separately on left and right of the driver's seat 21, respectively, and each of the left and right operation levers 22 and 23 instructs a rotation direction and rotation speed of a corresponding one of the left wheel 12 and the right wheel 13 at a corresponding side by moving the corresponding one of the operation levers 22 and 23 in a front-rear direction. Specifically, in the main frame 20, two guide panels 26 and 27 are fixed at both of left and right sides of the driver's seat 21, and the two operation levers 22 and 23 at left and right are supported on the main frame 20 so that each of the two levers 22 and 23 at left and right projects upward from a corresponding one of the two guide panels 26 and 27. The left operation lever 22 corresponds to a travel instruction tool that instructs acceleration/deceleration, stopping, and forward/reverse rotation of the left traveling motor 30, and the right operation lever 23 corresponds to a travel instruction tool that instructs acceleration/deceleration, stopping, and forward/reverse rotation of the right traveling motor 31. Respective tip end portions of the operation levers 22 and 23 are gripped by the driver and are used for instructing rotation directions and rotation speeds of the left wheel 12 and the right wheel 13. The left operation lever 22 is operated for instructing a drive state of the left wheel 12. The right operation lever 23 is operated for instructing a drive state of the right wheel 13. Each of the operation levers 22 and 23 has an approximate L-shape, so that a gripping portion 24 extending in a left-right direction in an upper end portion is formed. The gripping portion 24 is gripped and operated by the driver. Each of the operation levers 22 and 23 can be rocked about a shaft extending in the left-right direction at a lower end portion. As for each of the operation levers 22 and 23, when the operation lever 22 (or 23) is tilted forward using as a reference an N position that is a neutral position near an upright position, the operation lever 22 (or 23) instructs to drive the motor 30 (or 31) at a same side as the operation lever 22 (or 23) at a target rotation number per unit time (sec-1) that is a target rotation speed corresponding to forward traveling. As the target rotation speed, a target rotation number per minute (min-1) may be set. Each of the operation levers 22 and 23 instructs to cause the target rotation number to increase as a tilt amount increases. When the operation lever 22 (or 23) is tilted backward using the N position as a reference, the operation lever 22 (or 23) instructs to drive the motor 30 (or 31) on the same side as the operation lever 22 (or 23) at a target rotational number corresponding to backward traveling and instructs to cause the target rotational number to increase as the tilt amount increases. When being moved to the N position, each of the operation lever 22 and 23 instructs to stop driving of the motor 30 (or 31) at the same side as the operation lever 22 (or 23). Thus, each operation levers 22 and 23 instructs forward traveling, backward traveling, and stopping of the vehicle by instructing the target rotation number of a corresponding one of the traveling motors 30 and 31 by an operation by the user.

Tilt positions of the two operation levers 22 and 23 at left and right in the front-rear direction are detected by a left lever sensor 50 and a right lever sensor 51 (FIG. 3) that are lever position sensors, respectively. Each of the lever sensors 50 and 51 includes, for example, a potentiometer. A detection signal of each of the lever sensors 50 and 51 is transmitted to a control device 40.

The two caster wheels 15 and 16 at left and right are steered wheels supported on a front end portion of the main frame 20 and also serve as front wheels. The caster wheels 15 and 16 are provided so as to be spaced apart from the left wheel 12 and the right wheel 13 in the front-rear direction of the vehicle 10. Each of the caster wheels 15 and 16 is capable of free rotation of 360 degrees or more about a shaft extending in the vertical direction (up-down direction in FIG. 1). Note that the caster wheels are not limited to such a configuration where two caster wheels are arranged on a vehicle, and only one caster wheel or three or more caster wheels may be arranged on the vehicle.

As illustrated in FIG. 2, the left traveling motor 30 is coupled to the left wheel 12 via a left side reduction gear device 58 supported at a rear side of the main frame 20. The right traveling motor 31 is coupled to the right wheel 13 via a right side reduction gear device 59 supported at the rear side of the main frame 20. The left traveling motor 30 and the right traveling motor 31 are supported at the left side and the right side, respectively, at the rear side of the main frame 20. Thus, the two traveling motors 30 and 31 at left and right are coupled to the two wheels 12 and 13 at left and right, respectively, and are driven independently from each other.

The battery 82 (FIG. 3) is coupled to the left traveling motor 30 via the left traveling inverter 84 (FIG. 3), so that power is supplied from the battery 82 to the left traveling motor 30. The battery 82 is coupled to the right traveling motor 31 via the right traveling inverter 86 (FIG. 3), so that power is supplied from the battery 82 to the right traveling motor 31. The left traveling motor 30 and the right traveling motor 31 are, for example, three-phase motors. As illustrated in FIG. 2, the battery 82 is fixed to an upper face side or a lower face side of the main frame 20 at a more rear side than the driver's seat 21.

As illustrated in FIGs. 1 and 2, the lawn mowing device 18 is supported under an intermediate potion of the main frame 20 in a longitudinal direction. Thus, the lawn mowing device 18 is arranged between the caster wheels 15 and 16 and the left and right wheels 12 and 13 in the front-rear direction. The lawn mowing device 18 includes three mowing blades 18a, 18b, and 18c (FIG. 2) that are rotary lawn mowing tools arranged inside a mower deck 19 that is a cover. Upper sides of the lawn mowing blades 18a, 18b, and 18c are covered by the mower deck 19. Each of the lawn mowing blades 18a, 18b, and 18c includes a plurality of blade elements that rotate around a shaft oriented in the vertical direction (paper front-back direction of FIG. 2). Thus, the blade elements can rotate to cut and mow a lawn. A corresponding one of the three deck motors 60 that are work motors is coupled to each of the three lawn mowing blades 18a, 18b, and 18c. The battery 82 is coupled to each of the deck motors 60 via a deck inverter 88 (FIG. 3) that is an inverter for a corresponding one of the deck motors 60, so that power is supplied from the battery 82 to each of the deck motors 60. Each of the deck motors 60 is, for example, a three-phase motor.

The lawn mowing device may be configured to include, as a rotary lawn mowing tool, a lawn mowing reel that includes, for example, a spiral blade arranged around a rotation shaft parallel to a ground surface, has a function of mowing a lawn or the like, and is driven by a deck motor.

FIG. 3 is a block diagram illustrating a control system 80 of the vehicle 10. A start switch 35, the work drive switch 33, the backward work permission switch 34, the two lever sensors 50 and 51 at left and right, the two traveling inverters 84 and 86 at left and right, the deck inverter 88, and two motor speed sensors 54 and 55 at left and right are coupled to the control device 40. Although not shown in FIG. 1, the start switch 35, the backward work permission switch 34 and the work drive switch 33 are provided on the upper surface of the guide panel 26 (or 27) that guides the operating lever 22 (or 23). The start switch 35 is provided so as to be operable by the driver, and based on an operation of the start switch 35, power is supplied from the battery 82 to the control device 40 to start the control device 40. The work drive switch 33 is provided so as to be operable by the driver, instructs driving of the lawn mowing device 18 by an ON operation of the work drive switch 33, and instructs stopping of the lawn mowing device 18 by an OFF operation thereof. When driving of the lawn mowing device 18 is instructed by the work drive switch 33, the control device 40 controls the deck inverter 88 that will be described later to drive the deck motor 60 to continue to rotate at a predetermined target rotation number.

On the other hand, a configuration in which the vehicle includes only one traveling motor, instead of the two traveling motors 30 and 31 at left and right, and only one work motor, instead of the three deck motors 60, and the operation levers 22 and 23 instruct the target rotation number of the one traveling motor and the work drive switch 33 instructs driving of the one work motor may be employed.

The control device 40 controls driving of the lawn mowing device 18 in accordance with an operation of the work drive switch 33 and controls traveling of the vehicle 10 in accordance with an operation of the operation levers 22 and 23. Furthermore, when the vehicle 10 is traveling backward, the control device 40 forcibly stops driving of the lawn mowing device 18 by stopping the deck motors 60 during a normal operation in which the backward work permission switch 34 that will be described later is not operated ON.

The backward work permission switch 34 can be operated ON or OFF by the driver and forced stopping of the lawn mowing device 18 at a start of backward traveling of the vehicle 10 is disabled by an ON operation performed by the driver. By this disabling of forced stopping, it is possible to cause driving of the lawn mowing device 18 by an ON operation of the work drive switch 33 when the vehicle 10 travels backward or to maintain driving of the lawn mowing device 18 when the lawn mowing device 18 is being driven. Thus, a lawn mowing work while traveling backward is enabled.

The control system 80 includes the start switch 35, the work drive switch 33, the backward work permission switch 34, and the two operation levers 22 and 23 at left and right, the two lever sensors 50 and 51 at left and right, the two traveling motors 30 and 31 at left and right and the traveling inverters 84 and 86, the two motor speed sensors 54 and 55 at left and right, and the three deck motors 60 and the deck inverters 88, the three deck motor speed sensors 52, and the control device 40. Although only one deck motor 60, one deck inverter 88, and one deck motor speed sensor 52 are illustrated in FIG. 3, in reality, the three deck motors 60 are provided, as illustrated in FIG. 2, and therefore, the three deck inverters 88 and the three deck motor speed sensors 52 are provided in the control system 80, accordingly.

The left traveling inverter 84 drives the left traveling motor 30 and the right traveling inverter 86 drives the right traveling motor 31. Each of the traveling inverters 84 and 86 includes, for example, a traveling inverter circuit including three arms each of which includes two switching elements electrically coupled in series, and a traveling inverter control device that controls the traveling inverter circuit.

Actuation of each of the traveling inverters 84 and 86 is controlled by the control device 40. Thus, the left traveling motor 30 is controlled by the control device 40 via the left traveling inverter 84. The right traveling motor 31 is controlled by the control device 40 via the right traveling inverter 86. Therefore, the left traveling motor 30 and the right traveling motor 31 are driven by the control device 40 independently from each other with respect to the direction and the rotation number. Accordingly, the left traveling motor 30 and the right traveling motor 31 independently drive the left wheel 12 and the right wheel 13 with respect to the rotation direction and the rotation number.

Furthermore, detection values of the rotation number n (sec-1) of the left traveling motor 30 are input from the left motor speed sensor 54 to the left traveling inverter control device of the left traveling inverter 84. Detection values of the rotation number n (sec-1) of the right traveling motor 31 are input from the right motor speed sensor 55 to the right traveling inverter control device of the right traveling inverter 86. The two motor speed sensors 54 and 55 at left and right detect the rotation numbers of the two traveling motors 30 and 31 at left and right, respectively. Detection values of the rotation number of each of the motor speed sensors 54 and 55 are output to the control device 40.

Each of the deck inverters 88 drives a corresponding one of the deck motors 60. Similar to the traveling inverter circuit and the traveling inverter control device of each of the traveling inverters 84 and 86, each of the deck inverters 88 also includes a deck inverter circuit and a deck inverter control device that controls the deck inverter circuit.

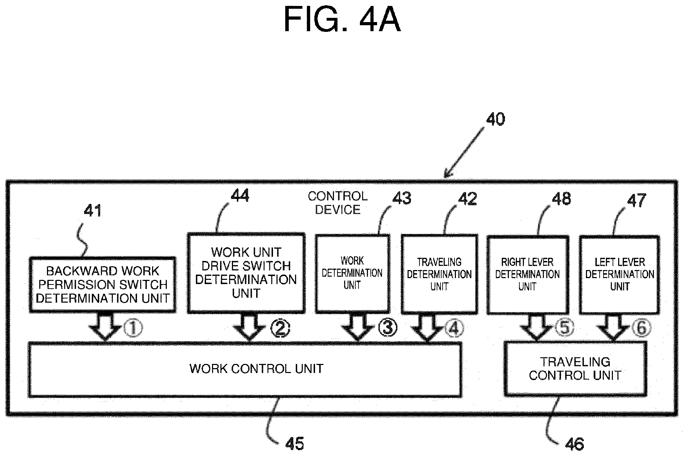

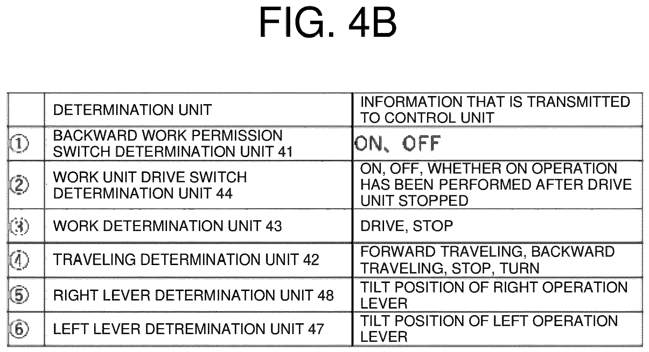

FIG. 4A is a block diagram illustrating a functional configuration of the control device 40 that constitutes the control system 80. FIG. 4B illustrates a relationship between each of determination units 41 to 44, 47, and 48 illustrated in FIG. 4A and information transmitted from each of the determination units to control units 45 and 46. The control device 40 includes a work control unit 45 and a traveling control unit 46. The work control unit 45 controls driving of each of the deck inverters 88. Thus, each of the deck motors 60 is controlled by the work control unit 45 via a corresponding one of the deck inverters 88. Therefore, each of the lawn mowing blades 18a, 18b, and 18c is driven to rotate by a corresponding one of the deck motors 60. Each of the deck motors 60 is driven, basically, to maintain a predetermined target rotation number. A lawn cut by the lawn mowing device 18 is discharged out of the vehicle 10 to one side in the left-right direction through a discharge duct 18d provided at one side of the mower deck 19 in the left-right direction.

Furthermore, detection values of the rotation number n (sec-1) of a corresponding one of the deck motors 60 are input from a corresponding one of the deck motor speed sensors 52 to the deck inverter control device of each of the deck inverters 88. Each of the deck motor speed sensors 52 detects the rotation number of the corresponding one of the deck motors 60. Detection values of the rotation number of each of the deck motor speed sensors 52 are output to the control device 40 via a corresponding one of the deck inverters 88. Note that, in FIG. 3, a power supply path from the battery 82 is indicated by a thick solid line. In FIG. 3, a signal transmission path is indicated by a thin solid line.

The control device 40 includes an arithmetic unit, such as a CPU or the like, and a storage unit, such as a memory or the like, and is configured of, for example, a microcomputer. The control device 40 acquires operation positions of the two operation levers 22 and 23 from detection signals of the two lever sensors 50 and 51 at left and right to set respective target rotation numbers of the left traveling motor 30 and the right traveling motor 31 in accordance with the respective operation positions of the operation levers 22 and 23.

The control device 40 includes a left lever determination unit 47 to which a detection value is transmitted from the left lever sensor 50 and that determines a current tilt position of the left operation lever 22 from the detection value, and a right lever determination unit 48 to which a detection value is transmitted from the right lever sensor 51 and that determines a current tilt position of the right operation lever 23 from the detection value. As indicated by 5 to 6 in circles in FIGs. 4A and 4B, to the traveling control unit 46, information representing the tilt position of the left operation lever 22 is transmitted from the left lever determination unit 47 and information representing the tilt position of the right operation lever 23 is transmitted from the right lever determination unit 48. The traveling control unit 46 controls each of the traveling motors 30 and 31 such that the vehicle 10 travels straight or turns by setting the target rotation numbers of the two traveling motors 30 and 31 on left and right in accordance with the respective tilt positions of the operation levers 22 and 23. Furthermore, the vehicle 10 in FIG. 1 can make a pivot turn, that is a turn with a turning radius of 0 that is a so-called zero turn, by the left wheel 12 and the right wheel 13 rotate in opposite directions to each other. A pivot turn is a turn that is neither backward traveling nor forward traveling.

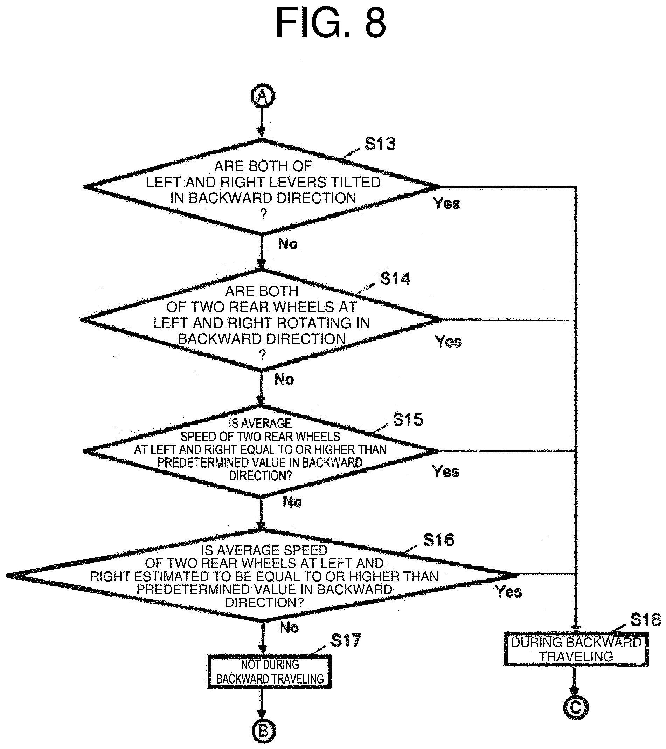

Furthermore, the vehicle 10 of this example includes a backward work permission switch determination unit 41, a traveling determination unit 42, a work determination unit 43, and a work drive switch determination unit 44. The backward work permission switch determination unit 41 determines whether the backward work permission switch 34 is operated OFF or ON. The traveling determination unit 42 determines a traveling state of the vehicle, that is, whether the vehicle is traveling forward, is traveling backward, or is stopped, or whether the vehicle is turning. At this time, similar to a case that will be described later with reference to a flowchart in FIG. 8, the traveling determination unit 42 determines that the vehicle is traveling backward in at least one of when it is determined that the two wheels 12 and 13 at left and right rotate in the backward direction and when it is determined that average speed of the two wheels 12 and 13 at left and right is equal to or higher than a predetermined value in terms of speed in the backward direction.

Determination on whether the two wheels 12 and 13 at left and right rotate in the backward direction is performed in accordance with the operation positions of the left and right levers 22 and 23 acquired from the detection signals of the left and right lever sensors 50 and 51 or the rotation directions of the left and right traveling motors 30 and 31 acquired from the detection signals of the left and right motor speed sensors 54 and 55. For example, when the operating position of each of the operation levers 22 and 23 is in the backward direction, it is determined that the two wheels 12 and 13 at left and right rotate in the backward direction and the vehicle is traveling backward. When the rotation directions of the left and right traveling motors 30 and 31 are the backward direction, it is determined that the two wheels 12 and 13 at left and right rotate in the backward direction and the vehicle is traveling backward.

Determination on whether the average speed of the two wheels 12 and 13 at left and right is equal to or higher than the predetermined value in terms of speed in the backward direction is also performed in accordance with the operating positions of the left and right levers 22 and 23 acquired from the detection signals of the left and right lever sensors 50 and 51 or the rotation speeds of the left and right traveling motors 30 and 31 acquired from the detection signals of the left and right motor speed sensors 54 and 55. For example, when the average speed of the two wheels 12 and 13 at left and right is estimated from the respective operating positions of the operation levers 22 and 23 and the average speed is speed (speed in the backward direction) at which the vehicle moves in the backward direction, it is determined that the vehicle is traveling backward. When the average speed of the two wheels 12 and 13 at left and right is estimated from the rotation speeds of the left and right traveling motors 30 and 31 and the average speed is speed in the backward direction and is equal to or higher than the predetermined value, it is determined that the vehicle is traveling backward.

As described above, it is determined that the vehicle is traveling backward not only when both of the two wheels 12 and 13 merely rotate in the backward direction but also when the average speed of the two wheels 12 and 13 is equal to or higher than the predetermined value in terms of speed in the backward direction, and therefore, a turn in which it is difficult for the driver to see a travel direction only by viewing, such as a turn in which the rotation directions of the two wheels 12 and 13 are opposite to each other and the vehicle moves while turning in the backward direction as a whole, is also set as backward traveling. As will be described later, safety can be further enhanced by performing control to forcibly stop driving of the lawn mowing device 18 by backward traveling determination when the backward work permission switch 34 is operated OFF.

The work determination unit 43 determines whether the lawn mowing device 18 is being driven or stopped based on the rotation speeds of the deck motors 60 acquired from the detection signals of the deck motor speed sensors 52. The work drive switch determination unit 44 determines whether the work drive switch 33 is operated OFF or ON.

Information representing corresponding determination results is transmitted to the work control unit 45 from the backward work permission switch determination unit 41, the traveling determination unit 42, the work determination unit 43, and the work drive switch determination unit 44, as indicated by 1 through 4 in the circles in FIGs. 4A and 4B. The work control unit 45 controls driving of the lawn mowing device 18 using the determination results of the backward work permission switch determination unit 41, the traveling determination unit 42, the work determination unit 43, and the work drive switch determination unit 44. For example, in a case where the backward work permission switch 34 is operated ON and the work drive switch 33 is operated ON, the work control unit 45 performs ON operation control in which the lawn mowing device 18 is controlled to be driven when the vehicle 10 travels backward. In a case where the backward work permission switch 34 is operated ON and the work drive switch 33 is operated ON, the work control unit 45 performs first OFF operation control in which driving of the lawn mowing device 18 is controlled to be forcibly stopped both when the vehicle 10 is traveling backward and when the vehicle 10 is shifted from backward traveling to a stop state.

Second OFF operation control may be performed together with or instead of the first OFF operation control. In the second OFF operation control, in a case where the backward work permission switch 34 is operated OFF and the work drive switch 33 is operated ON, the work control unit 45 forcibly stops the lawn mowing device 18 when the vehicle 10 travels backward. In the second OFF operation control, after the work control unit 45 forcibly stops the lawn mowing device 18, the work control unit 45 controls the lawn mowing device 18 to drive the lawn mowing device 18 only when the vehicle 10 finishes backward traveling, the work drive switch 33 is shifted to OFF operation, and then, is shifted again to ON operation.

With the above-described control system 80, efficiency of a lawn mowing work can be increased. Specifically, by the above-described ON operation control, even when the vehicle 10 travels backward, in a case where the backward work permission switch 34 is operated ON, the lawn mowing device 18 can be driven, so that a lawn mowing work while the vehicle 10 is traveling backward is enabled and the efficiency of the lawn mowing work can be increased. Moreover, by one or both of the first and second OFF operation controls described above, the safety of the vehicle 10 when the backward work permission switch 34 is operated OFF can be further enhanced.

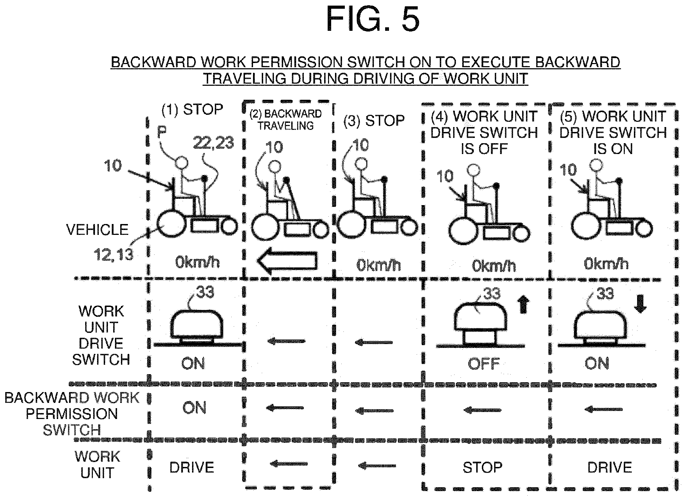

FIG. 5 illustrates an example of temporal changes of respective states of traveling of the vehicle 10, the work drive switch 33, the backward work permission switch 34, and the lawn mowing device 18 (work implement) when the backward work permission switch 34 is operated ON in the embodiment. In the example in FIG. 5, the work drive switch 33 is operated ON, and the vehicle 10 travels backward in the direction of the arrow (2) from a stop state (1) by operations of the left and right operation levers 22 and 23 in the backward direction by a driver P and then stops again (3). At this time, the lawn mowing device 18 is driven by an ON operation of the work drive switch 33 in an initial stop state (1) of the vehicle 10, but when the work drive switch 33 is switched from the ON operation to an OFF operation in a second stop state (3), the lawn mowing device 18 stops (4). Next, when the work drive switch 33 is switched to an ON operation again in this stop state, the lawn mowing device 18 is driven again (5). As described above, work efficiency can be increased because a work during backward traveling can be performed when the driver has an intention to operate the backward work permission switch 34 ON and it is highly likely that the driver has confirmed that a surrounding area is very safe. Note that, in FIG. 5, a case where the work drive switch 33 is a push-button type, and ON and OFF of the work drive switch 33 is alternately switched by a pressing operation is illustrated, but the work drive switch 33 is not limited thereto, and various configurations, such as a toggle type, a rocker type, or the like, can be employed. Moreover, in FIG. 5, a case where the work drive switch 33 is a push type and also an alternating two-position switching type, that is, a case where, in the ON state, the operation unit is maintained in a pressed-down position and in the OFF state, the operation unit is moved back up by an internal spring force, is illustrated. In addition, the work drive switch 33 may be a push type and also an alternating one-position switching type. For example, when the work drive switch 33 is a one-position switching type, the work drive switch 33 is alternately switched between ON and OFF by a pressing operation, but the pressing position of the operation unit is not maintained even in the ON state and returns to the same position as the OFF position. Even when the work drive switch 33 is a one-position switching type, the work drive switch 33 is turned OFF by pushing the work drive switch 33 in the ON state while the vehicle is in a stop state, so that the lawn mowing device 18 stops. Thereafter, the work drive switch 33 is turned ON by pushing the work drive switch 33 again, and the lawn mowing device 18 is driven again. Similar to the work drive switch 33, for the backward work permission switch 34, various configurations, such as a configuration of a push-button type or the like, can be employed.

By each of the above-described OFF operation controls, the lawn mowing device 18 is forcibly stopped not only when the vehicle 10 is traveling backward but also when the vehicle 10 is shifted from backward traveling to a stop state. Thus, it is easier for the driver to prevent, in a case where the driver intentionally operates the backward work permission switch 34 to be OFF, an obstacle from approaching the lawn mowing device 18 in operation during backward traveling in which it is harder for the driver to see an area ahead of the vehicle 10 in the travel direction than in forward traveling, so that safety can be further enhanced. It is also possible to prevent the driver from unintentionally and abruptly restarting driving of the lawn mowing device 18 when the vehicle 10 is shifted to a stop state from backward traveling. Moreover, it is also possible to give the driver time to check whether there is an obstacle around the vehicle and other safe conditions before driving of the lawn mowing device 18 is restarted to confirm a safe condition, and thus, to give the driver a higher sense of safety. Thus, safety can be even further enhanced.

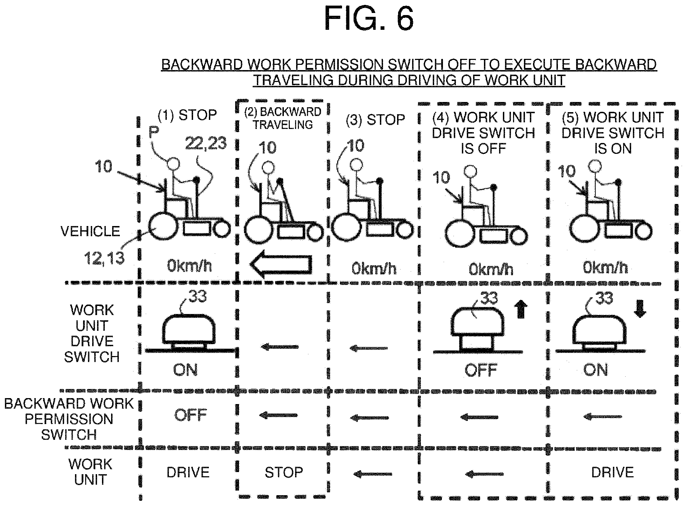

FIG. 6 illustrates an example of temporal changes of respective states of traveling of the vehicle 10, the work drive switch 33, the backward work permission switch 34, and the lawn mowing device 18 (work implement) when the backward work permission switch 34 is operated OFF in the embodiment. FIG. 6 illustrates a case where both the first OFF operation control and the second OFF operation control are performed. In the case of FIG. 6, similar to the case of FIG. 5, the work drive switch 33 is operated ON, and the vehicle 10 drives backward from a stop state (1) in the direction of the arrow (2) and then stops again (3). At this time, the lawn mowing device 18 is driven by an ON operation of the work drive switch 33 in the initial stop state of the vehicle 10 (1), but driving of the lawn mowing device 18 is forcibly stopped by shifting the vehicle 10 to backward traveling (2). This forced stop state continues while the vehicle is in the second stop state (3). Thus, it is possible to give the driver P time to check for safety before driving of the lawn mowing device 18 is restarted (4) and to thus give the driver P a higher sense of safety.

In a case where the vehicle 10 travels backward by the second OFF operation control, the lawn mowing device 18 is controlled to be driven only when the vehicle 10 finishes backward traveling and the work drive switch 33 is shifted to OFF operation (4) and then is shifted to ON operation again (5). Thus, in FIG. 6, the lawn mowing device 18 restarts driving only when, in the second stop state (3), the driver P switches the work drive switch 33 from the ON operation to an OFF operation (4) and then performs an ON operation again (5). Therefore, the driver P can limit restart of driving of the lawn mowing device 18 to a case where the driver P intentionally operates the work drive switch 33 (5), so that an even higher sense of safety can be given to the driver P. Moreover, also when the work drive switch 33 is a one-position switching type, driving of the lawn mowing device 18 is forcibly stopped by shifting the vehicle from a stop state to backward traveling, and thereafter, while the vehicle is in a stop state, the work drive switch 33 is turned OFF by pushing the work drive switch 33, and then, the work drive switch 33 is pushed again and thus is turned ON, thereby driving the lawn mowing device 18 again. When the work drive switch 33 is a one-position switching type, for example, an ON/OFF state may be displayed on a display unit. Note that, in the foregoing, switching of the work drive switch 33 from the ON operation to the OFF operation is performed while the vehicle 10 is in a stop state, but the switching may be performed while the vehicle 10 is traveling forward, as long as a timing of the switching is after backward traveling is finished, and the lawn mowing device 18 may be driven by performing the above-described switching while traveling forward.

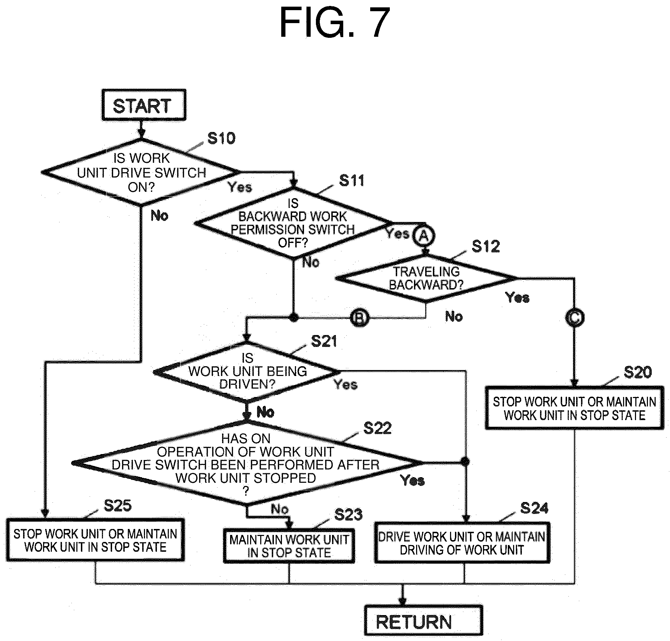

FIG. 7 is a flowchart illustrating an example of a control method of the lawn mowing device 18 (work implement) in the embodiment. FIG. 8 is a flowchart illustrating a subroutine of a backward traveling determination process in FIG. 7. The above-described ON operation control and the first and second OFF operation controls may be executed in accordance with the control method illustrated in the flowcharts of FIGs. 7 and 8. In a case where the backward work permission switch 34 is operated OFF and the work drive switch 33 is operated ON, the work control unit 45 of the control device 40 forcibly stops driving of the lawn mowing device 18 when it is determined that the two wheels 12 and 13 at left and right rotate in the backward direction and when the average speed of the two wheels 12 and 13 at left and right is equal to or higher than the predetermined value in terms of speed in the backward direction. Furthermore, in a case where the backward work permission switch 34 is operated OFF, the vehicle 10 is not traveling backward, and the lawn mowing device 18 is not driven, the work control unit 45 maintains a stop state of the lawn mowing device 18 when the work drive switch 33 is not in a state where an ON operation (OFF to ON) has not been performed after the lawn mowing device 18 stopped. On the other hand, when the work drive switch 33 is operated ON after the lawn mowing device 18 has stopped, the work control unit 45 drives the lawn mowing device 18 or maintains driving of the lawn mowing device 18. Therefore, the work control unit 45 receives, in addition to information on whether the work drive switch 33 is ON or OFF, information on whether the ON operation of the work drive switch 33 is an operation after the lawn mowing device 18 has stopped when the work drive switch 33 is operated ON from the work drive switch determination unit 44. Note that a configuration in which, when the work control unit 45 receives information that the work drive switch 33 has been operated ON from the work drive switch determination unit 44, the work control unit 45 determines whether the ON operation of the work drive switch 33 is an operation after the lawn mowing device 18 has stopped from information on driving or stopping of the lawn mowing device 18 that has been transmitted from the work determination unit 43 and received to be stored by then may be employed.

Specifically, first, in Step S10 of FIG. 7, whether the work drive switch 33 is ON is determined. If a determination result of Step S10 is positive (YES), the process proceeds to Step S11. If the determination result of Step S10 is negative (NO), the lawn mowing device 18 is stopped or a stop state thereof is maintained in Step S25. In Step S11, whether the backward work permission switch 34 has been turned OFF is determined. If a determination result of Step S11 is positive (YES), whether the vehicle 10 is traveling backward is determined in Step S12. On the other hand, if the determination result of Step S11 is negative (NO), the process proceeds to Step S21.

A, B, and C in FIG. 8 correspond to A, B, and C in FIG. 7, respectively. In the process illustrated in FIG. 8, in Step S13, whether both the left and right operation levers 22 and 23 are tilted in the backward direction is determined from the detection signals of the lever sensors 50 and 51. In Step S14, whether the two wheels 12 and 13 at left and right are both rotating in the backward direction is determined from the detection signals of the motor speed sensors 54 and 55. In Step S15, whether the average speed of the two wheels 12 and 13 at left and right is equal to or higher than the predetermined value in terms of speed in the backward direction is determined from the detection signals of the motor speed sensors 54 and 55. In Step S16, whether it is estimated that the average speed of the two wheels 12 and 13 at left and right has is equal to or higher than the predetermined value in terms of speed in the backward direction is determined from the detection signals of the lever sensors 50 and 51 that detects the operation positions of the left and right operation levers 22 and 23.

If a determination result is positive (YES) in at least one of Steps S13 to S16, it is determined in Step S18 that the vehicle 10 is traveling backward and the process proceeds to Step S20. In Step S20, driving of the lawn mowing device 18 is forcibly stopped, that is, when the lawn mowing device 18 is being driven, the lawn mowing device 18 is shifted to a stop state and, when the lawn mowing device 18 is in a stop state, the stop state of the lawn mowing device 18 is maintained. On the other hand, if the determination result is negative (NO) in all of Steps S13 to S16, it is determined in Step S17 that the vehicle 10 is not traveling backward and the process proceeds to Step S21. An order of determinations of Steps S13 to S16 of FIG. 8 is not limited.

In Step S21, whether the lawn mowing device 18 is being driven is determined. If a determination result of Step S21 is positive, the process proceeds to Step S24 to drive the lawn mowing device 18 or maintain driving of the lawn mowing device 18. If the determination result of Step S21 is negative, in Step S22, whether switching from the OFF operation to the ON operation that is the ON operation of the work drive switch 33 has been performed after the lawn mowing device 18 stopped is determined. If a determination result of Step S22 is positive, the process proceeds to Step S24 to drive the lawn mowing device 18 or maintain driving of the lawn mowing device 18.

On the other hand, if the determination result of Step S22 is negative, a stop state of the lawn mowing device 18 is maintained. After processes of S25, S23, S24, and S20, the process returns to a process of Step S10.

According to a configuration in which the control method illustrated in FIGs. 7 and 8 is executed, backward traveling determination is performed in accordance with the processes illustrated in the subroutine in FIG. 8, and it is determined that the vehicle is traveling backward not only when both of the two wheels 12 and 13 merely rotate in the backward direction but also when the average speed of the two wheels 12 and 13 is equal to or higher than the predetermined value in terms of speed in the backward direction. Thus, a turn in which it is difficult for the driver to see a travel direction only by viewing, such as a turn in which the rotation directions of the two wheels 12 and 13 are opposite to each other and the vehicle 10 travels while turning backward as a whole, is also set as backward traveling. Therefore, safety can be further enhanced by performing control to forcibly stop driving of the lawn mowing device 18 by backward traveling determination when the backward work permission switch 34 is operated OFF.

According to a configuration in which the control method illustrated in FIGs. 7 and 8 is executed, similar to the above-described case where the second OFF operation control is performed, in a case where the backward work permission switch 34 is operated OFF, when the vehicle 10 stops traveling after traveling backward, the vehicle 10 is not traveling backward and the lawn mowing device 18 is forcibly stopped and is thus not driven. In this case, driving of the lawn mowing device 18 is restarted only when the vehicle 10 is in a stop state and, after backward traveling is finished, the work drive switch 33 is shifted to the OFF operation and then is shifted to the ON operation again. Thus, similar to the case of FIG. 6, driving of the lawn mowing device 18 is restarted only when the driver operates the work drive switch 33 to be OFF from ON and then performs the ON operation again in the stop state after backward traveling is finished. Therefore, it is possible to give the driver an even higher sense of safety because restart of driving of the lawn mowing device 18 is limited to a case where the driver intentionally operates the work drive switch 33.

Note that a configuration in which, in a determination process of FIG. 8, only processes of Steps S13 and S14 or processes of Steps S15 and S16 are performed may be employed. On the other hand, accuracy of backward traveling determination can be increased by performing the determination processes of Steps S13 to S16 in a manner illustrated in FIG. 8.

In the foregoing, a case where the wheels 12 and 13 that are left and right drive wheels are driven by the electric motors has been described, but a configuration in which the left and right drive wheels are driven by hydraulic motors may be employed. In this case, the vehicle may include an engine to drive a hydraulic pump that supplies pressure oil to each of the hydraulic motors. A configuration in which, when the drive wheels are driven by the electric motors, the vehicle includes an engine and power generated by a generator driven by the engine is supplied to the battery to charge the battery may be employed.

A configuration in which, when the above-described configuration of the embodiment is applied to a vehicle in which a steering wheel is used as a turning indicator and an accelerator pedal provided in front of the seat is used as a travel instruction tool (of a single-pedal seesaw type or a two-pedal type), the left and right drive wheels are driven by a single electric motor may be employed. In this case, power of the electric motor is differentially transmitted to left and right axles to which the left and right drive wheels are coupled via a differential device. Therefore, the two drive wheels at left and right are not driven independently. In this case, instead of the backward traveling determination process illustrated in FIG. 8, a sensor that detects the rotation direction and the rotation speed of the electric motor or a rotating member (that may be a wheel) on a power transmission path from the electric motor to the wheel is provided and backward traveling determination is performed in accordance with a detection signal of the sensor. The control device may be configured to receive a detection signal indicating whether the accelerator pedal is operated in the backward direction from an accelerator pedal sensor to perform backward traveling determination. Note that the accelerator pedal may be configured without a forward/backward traveling switching indicator function and a forward/backward traveling switching indicator may be provided separately from the accelerator pedal in the vehicle. In this case, a sensor that detects an instruction direction of the forward/backward traveling switching indicator may be provided and the control device may be configured to preform backward traveling determination in accordance with a detection signal of the sensor.

### REFERENCE SIGNS LIST

10 Electric work vehicle (vehicle)
12 Left wheel
13 Right wheel
15, 16 Caster wheel
18 Lawn mowing device (work implement)
18a to 18c Mowing blade
18d Discharge duct
19 Mower deck
20 Main frame
20a, 20b Side plate portion
20c Coupling portion
21 Driver's seat
22, 23 Operation lever (traveling operation unit)
24 Gripping portion
26, 27 Guide panel
30 Left traveling motor
31 Right traveling motor
32 Operation unit
33 Work drive switch (work operation unit)
34 Backward work permission switch
35 Start switch
40 Control device
50 Left lever sensor
51 Right lever sensor
52 Deck motor speed sensor
54 Left motor speed sensor
55 Right motor speed sensor
60 Deck motor (work motor)
82 Battery
84 Left traveling inverter
86 Right traveling inverter
88 Deck inverter

## Claims

1. A control system (80) for a work vehicle (10) that includes a work implement (18), the control system (80) comprising:
a work operation unit (33) that is configured to instruct driving of the work implement (18) by an ON operation performed by a user;
a traveling operation unit (32) that is configured to instruct forward traveling, backward traveling, and stopping of the work vehicle (10) by an operation performed by the user;
a control device (40) that is configured to control driving of the work implement (18) in accordance with the operation of the work operation unit (33), controls traveling of the work vehicle (10) in accordance with the operation of the traveling operation unit (32), and forcibly stops the work implement (18) when the work vehicle (10) travels backward; and
a backward work permission switch (34) that is configured to disable forced stopping of the work implement (18) at a start of backward traveling of the work vehicle (10) by an ON operation of the backward work permission switch (34) performed by the user,
wherein the control system (80) is further configured so that
in a case where the backward work permission switch (34) is operated ON and the work operation unit (33) is operated ON, the control device (40) drives the work implement (18) when the work vehicle (10) travels backward
and, **characterized in that** in a case where the backward work permission switch (34) is operated OFF and the work operation unit (33) is operated ON, the control device (40) forcibly stops the work implement (18) both when the work vehicle (10) is traveling backward and when the work vehicle (10) is shifted from a backward traveling state to a stop state.

2. The control system (80) for a work vehicle (10) according to claim 1, wherein
in a case where the backward work permission switch (34) is operated OFF and the work operation unit (33) is operated ON, the control device (40) forcibly stops the work implement (18) when the work vehicle (10) travels backward, and after forcibly stopping the work implement (18), the control device (40) drives the work implement (18) only when the work vehicle (10) finishes backward traveling and the work operation unit (33) is shifted to an OFF operation and then is shifted to an ON operation again.

3. The control system (80) for a work vehicle (10) according to claim 2, the control system (80) comprising:
two traveling motors left and right (30, 31) coupled to two wheels at left and right (12, 13) and driven independently from each other; and
two operation levers (22, 23) as the traveling operation units (32) that are arranged separately at left and right of a driver's seat (21) and each of which is configured to instruct a rotation direction and rotation speed of one of the wheels (12, 13) located at a corresponding side by moving of the corresponding operation lever (22, 23),
wherein
in a case where the backward work permission switch (34) is operated OFF and the work operation unit (33) is operated ON, the control device (40) forcibly stops the work implement (18) at least one of when it is determined that the two wheels at left and right (12, 13) rotate in a backward direction and when it is determined that average speed of the two wheels at left and right (12, 13) is equal to or higher than a predetermined value in terms of speed in the backward direction.

## Patentansprüche

1. Steuerungssystem (80) für ein Arbeitsfahrzeug (10), das ein Arbeitsgerät (18) aufweist, wobei das Steuerungssystem (80) umfasst:
eine Arbeitsbedieneinheit (33), die dazu eingerichtet ist, das Antreiben des Arbeitsgeräts (18) durch eine durch den Benutzer vorgenommene EIN-Bedienung anzuweisen;
eine Fahrbedieneinheit (32), die dazu eingerichtet ist, ein Vorwärtsfahren, ein Rückwärtsfahren und ein Anhalten des Arbeitsfahrzeugs (10) durch eine durch den Benutzer vorgenommene Bedienung anzuweisen;
eine Steuerungsvorrichtung (40), die dazu eingerichtet ist, das Antreiben des Arbeitsgeräts (18) gemäß der Bedienung der Arbeitsbedieneinheit (33) zu steuern, das Fahren des Arbeitsfahrzeugs (10) gemäß der Bedienung der Fahrbedieneinheit (32) zu steuern und das Arbeitsgerät (18) zwangsanzuhalten, wenn das Arbeitsfahrzeug (10) rückwärts fährt; und
einen Rückwärtsfahrt-Arbeitserlaubnisschalter (34), der dazu eingerichtet ist, das Zwangsanhalten des Arbeitsgeräts (18) bei einem Beginn eines Rückwärtsfahrens des Arbeitsfahrzeugs (10) durch eine durch den Benutzer vorgenommene EIN-Bedienung des Rückwärtsfahrt-Arbeitserlaubnisschalters (34) zu deaktivieren,
wobei das Steuerungssystem (80) des Weiteren so eingerichtet ist, dass
für den Fall, dass der Rückwärtsfahrt-Arbeitserlaubnisschalter (34) EIN-geschaltet ist und die Arbeitsbedieneinheit (33) EIN-geschaltet ist, die Steuerungsvorrichtung (40) das Arbeitsgerät (18) antreibt, wenn das Arbeitsfahrzeug (10) rückwärts fährt,
und **dadurch gekennzeichnet, dass** für den Fall, dass der Rückwärtsfahrt-Arbeitserlaubnisschalter (34) AUS-geschaltet ist und die Arbeitsbedieneinheit (33) EIN-geschaltet ist, die Steuerungsvorrichtung (40) das Arbeitsgerät (18) sowohl dann, wenn das Arbeitsfahrzeug (10) rückwärts fährt, als auch dann, wenn das Arbeitsfahrzeug (10) von einem Rückwärtsfahrzustand in einen Stoppzustand geschaltet wird, zwangsanhält.

2. Steuerungssystem (80) für ein Arbeitsfahrzeug (10) nach Anspruch 1, wobei
für den Fall, dass der Rückwärtsfahrt-Arbeitserlaubnisschalter (34) AUS-geschaltet ist und die Arbeitsbedieneinheit (33) EIN-geschaltet ist, die Steuerungsvorrichtung (40) das Arbeitsgerät (18) zwangsanhält, wenn das Arbeitsfahrzeug (10) rückwärts fährt, und die Steuerungsvorrichtung (40) das Arbeitsgerät (18) nach dem Zwangsanhalten des Arbeitsgeräts (18) nur dann antreibt, wenn das Arbeitsfahrzeug (10) das Rückwärtsfahren beendet und die Arbeitsbedieneinheit (33) in einen AUS-Betrieb geschaltet wird und dann wieder in einen EIN-Betrieb geschaltet wird.

3. Steuerungssystem (80) für ein Arbeitsfahrzeug (10) nach Anspruch 2, wobei das Steuerungssystem (80) umfasst:
zwei Fahrmotoren links und rechts (30, 31), die mit zwei Rädern links und rechts (12, 13) gekoppelt sind und unabhängig voneinander angetrieben werden; und
zwei Bedienhebel (22, 23) als die Fahrbedieneinheiten (32), die separat links und rechts von einem Fahrersitz (21) angeordnet sind und von denen jeder dazu eingerichtet ist, durch Bewegen des entsprechenden Bedienhebels (22, 23) eine Drehrichtung und Drehgeschwindigkeit eines der Räder (12, 13), das sich auf einer entsprechenden Seite befindet, anzuweisen,
wobei
für den Fall, dass der Rückwärtsfahrt-Arbeitserlaubnisschalter (34) AUS-geschaltet ist und die Arbeitsbedieneinheit (33) EIN-geschaltet ist, die Steuerungsvorrichtung (40) das Arbeitsgerät (18) zwangsanhält, wenn mindestens eines von: bestimmt wird, dass sich die zwei Räder links und rechts (12, 13) in einer Rückwärtsrichtung drehen, und bestimmt wird, dass die Durchschnittsgeschwindigkeit der zwei Räder links und rechts (12, 13) gleich einem oder höher als ein zuvor festgelegter Wert in Bezug auf eine Geschwindigkeit in der Rückwärtsrichtung ist.

## Revendications

1. Système de commande (80) pour un véhicule de travail (10) qui inclut un outil de travail (18), le système de commande (80) comprenant :
une unité d'opération de travail (33) qui est configurée pour ordonner l'entraînement de l'outil de travail (18) par une mise en position MARCHE effectuée par un utilisateur ;
une unité d'opération de déplacement (32) configurée pour ordonner le déplacement vers l'avant, le déplacement vers l'arrière et l'arrêt du véhicule de travail (10) par une opération effectuée par l'utilisateur ;
un dispositif de commande (40) qui est configuré pour commander l'entraînement de l'outil de travail (18) en fonction de l'opération de l'unité d'opération de travail (33), commander le déplacement du véhicule de travail (10) en fonction de l'opération de l'unité d'opération de déplacement (32) et arrêter de manière forcée l'outil de travail (18) lorsque le véhicule de travail (10) se déplace en marche arrière ; et
un commutateur d'autorisation de travail en marche arrière (34) qui est configuré pour désactiver l'arrêt forcé de l'outil de travail (18) au début du déplacement en marche arrière du véhicule de travail (10) par une mise en position MARCHE du commutateur d'autorisation de travail en marche arrière (34) effectuée par l'utilisateur,
dans lequel le système de commande (80) est en outre configuré de telle sorte que,
dans le cas où le commutateur d'autorisation de travail en marche arrière (34) est mis en position MARCHE et où l'unité d'opération de travail (33) est mise en position MARCHE, le dispositif de commande (40) entraîne l'outil de travail (18) lorsque le véhicule de travail (10) se déplace en marche arrière et
**caractérisé en ce que**, dans le cas où le commutateur d'autorisation de travail en marche arrière (34) est mis en position ARRET et où l'unité d'opération de travail (33) est mise en position MARCHE, le dispositif de commande (40) arrête de manière forcée l'outil de travail (18) à la fois lorsque le véhicule de travail (10) se déplace en marche arrière et lorsque le véhicule de travail (10) passe d'un état de déplacement en marche arrière à un état d'arrêt.

2. Système de commande (80) pour un véhicule de travail (10) selon la revendication 1, dans lequel
dans le cas où le commutateur d'autorisation de travail en marche arrière (34) est mis en position ARRET et où l'unité d'opération de travail (33) est mise en position MARCHE, le dispositif de commande (40) arrête de manière forcée l'outil de travail (18) lorsque le véhicule de travail (10) se déplace en marche arrière, et après avoir arrêté de manière forcée l'outil de travail (18), le dispositif de commande (40) entraîne l'outil de travail (18) uniquement lorsque le véhicule de travail (10) a terminé son déplacement en marche arrière et que l'unité d'opération de travail (33) est mise en position ARRET, puis remise en position MARCHE.

3. Système de commande (80) pour un véhicule de travail (10) selon la revendication 2, le système de commande (80) comprenant :
deux moteurs de déplacement gauche et droit (30, 31) couplés à deux roues gauche et droite (12, 13) et entraînés indépendamment l'un de l'autre ; et
deux leviers d'opération (22, 23) servant d'unités d'opération de déplacement (32) qui sont disposés séparément à gauche et à droite du siège du conducteur (21) et dont chacun est configuré pour ordonner un sens de rotation et une vitesse de rotation de l'une des roues (12, 13) situées du côté correspondant en déplaçant le levier d'opération correspondant (22, 23), dans lequel
dans le cas où le commutateur d'autorisation de travail en marche arrière (34) est mis en position ARRET et où l'unité d'opération de travail (33) est mise en position MARCHE, le dispositif de commande (40) arrête de manière forcée l'outil de travail (18) lorsqu'il est déterminé que les deux roues gauche et droite (12, 13) tournent dans une direction arrière et/ou lorsqu'il est déterminé que la vitesse moyenne des deux roues gauche et droite (12, 13) est égale ou supérieure à une valeur prédéterminée en termes de vitesse dans la direction arrière.
